# EUROPÄISCHE PATENTSCHRIFT

(11) **EP 1 880 591 B1**
(45) Veröffentlichungstag und Bekanntmachung des Hinweises auf die Patenterteilung: **09.09.2009**
(21) Anmeldenummer: 07014151.0
(22) Anmeldetag: 19.07.2007
(51) Int. Cl.: A01D 13/00

(54) **Kartoffelerntemaschine**
Potato harvester
Machine de récolte de pommes de terre

(30) Priorität: 22.07.2006 DE 102006033974
(43) Veröffentlichungstag der Anmeldung: 23.01.2008
(73) Patentinhaber: Grimme Landmaschinenfabrik GmbH & Co. KG, 49401 Damme (DE)
(72) Erfinder: Kalverkamp, Klemens, 49401 Damme (DE)
(74) Vertreter: Weeg, Thomas

(56) Entgegenhaltungen:
- EP-A- 1 205 099
- EP-A1- 0 719 495
- DE-A1- 2 510 455

## Beschreibung

Die Erfindung betrifft eine Kartoffelerntemaschine gemäß dem Oberbegriff des Anspruchs 1.

Kartoffelerntemaschinen bekannter Ausführung sind mit einer zumindest ein Rodeaggregat aufweisenden Aufnahmevorrichtung zum Aufnehmen des Kartoffeldamms versehen, wobei die am Maschinengestell gehaltene Aufnahmevorrichtung durch zumindest ein Auflageelement bodenseitig abstützbar ist. Gemäß DE 25 10 455 ist das Maschinengestell über Laufräder abgestützt und in DE 32 00 924 A1 ist im Bereich der Aufnahmevorrichtung eine auf dem Kartoffeldamm auflegbare Dammtrommel vorgesehen. Auch die Kartoffelerntemaschinen gemäß G 87 00 095.4 und DE 199 47 484 A1 weisen im Bereich der Rodeschare eine bodenseitige Dammrolle bzw. -trommel auf. Bei einer einreihigen Erntemaschine gemäß JP 07107828 A sind an der am Maschinengestell schwenkbar gehaltenen Aufnahmevorrichtung mittels zweier Führungsstangen ebenfalls jeweilige Dammtrommeln als Führungselemente vorgesehen, wobei deren bodenseitiger Auflagedruck durch über den Dammtrommeln vorgesehene Zusatzgewichte erhöht werden kann. Derartige Konstruktionen sind auch bei Kartoffelerntemaschinen gemäß EP 0 719 495 A1 und EP 1 205 099 A1 vorgesehen.

Bei einer Maschine gemäß DE 32 07 288 C2 ist bei einem einreihigen Kartoffelroder ein im Bereich des vorderen Randes des Aufnahmeschares mitführbares Tiefenrad vorgesehen. Dieses dient zur Tiefensteuerung und wird gleichzeitig zum Abschneiden von Kartoffelkraut genutzt. Auch in der Fachliteratur wird allgemein vorgeschlagen, zusätzlich zur Abtastung mittels Dammtrommeln o. dgl. Bauteile eine Tiefenführung der Rodeschar mit einem ohne Stützlast in der Furche mitlaufenden Stützrad zu verwenden.

Der Erfindung liegt die Aufgabe zugrunde, eine Kartoffelerntemaschine zu schaffen, deren Aufnahmevorrichtung eine für den Einstell- und Rodevorgang der Schare optimale Abstützung aufweist und dabei mit geringem technischen Aufwand eine Verbesserung der Rodeleistung ermöglicht.

Die Erfindung löst diese Aufgabe durch eine Kartoffelerntemaschine mit den Merkmalen des Anspruchs 1. Hinsichtlich weiterer Vorteile und Ausgestaltungen wird auf die Ansprüche 2 bis 27 verwiesen.

Die Kartoffelerntemaschine weist im Bereich der mit zumindest einem Rodeaggregat versehenen Aufnahmevorrichtung ein Auflageelement auf, das erfindungsgemäß von zumindest zwei entlang gegenüberliegender Seitenränder eines zwischenliegenden Kartoffeldamms verlagerbaren und als eine funktionale Einheit zusammenwirkenden Rollrädern gebildet ist.

In Abgrenzung zu an sich bekannten Dammtrommeln, Tasträdern o. dgl. Auflageelementen zur Tiefenführung von Aufnahmevorrichtungen bekannter Art ist die die beiden Rollräder aufweisende Führungseinheit so konzipiert, daß in den beiden Furchen neben dem zumindest einen Kartoffeldamm eine die Gewichtskraft der Aufnahmevorrichtung aufnehmende Abstützung erreicht ist. Mit geringem Aufwand sind die Rollräder auch für eine Tiefeneinstellung bzw. -steuerung der Rodeschare nutzbar. Die einen auf die jeweilige Breite des Kartoffeldamms abstimmbaren Querabstand aufweisenden Rollräder begrenzen in der Rodephase den Kartoffeldamm, so daß für den Fördervorgang eine Zwangsführung nach Art eines Einzugskanals bewirkt ist. Das seitlich geführte Rodematerial wird als ein stabilisierter Gemischstrom in die nachfolgende Trennstrecke eingeleitet, so daß damit die Zuführung des aufgenommenen Kartoffeldamms in nachgeordnete Aggregate der Maschine insgesamt verbessert ist. Diese Rollräder sind dabei als kombinierte Stütz-, Führungs- und Steuerelemente nutzbar, so daß die Aufnahmevorrichtung als eine funktional verbesserte Baueinheit bereitgestellt wird. Zusätzlich können die äußeren der Rollräder mit Schneidelementen versehen sein, so daß in den Aufnahmebereich ragendes Kartoffelkraut o. dgl. Pflanzenteile abgetrennt werden.

Durch eine weitgehend variable Gestaltung der Verbindungsbaugruppen zwischen den Rollrädern und einem Traggestell der Aufnahmevorrichtung sind unterschiedliche Antriebs- und Stützkonstruktionen sowie jeweilige Höhen- und Querverstellmöglichkeiten der Rollräder denkbar, so daß die Konstruktion insgesamt ein an die jeweiligen Rodebedingungen variabel anpaßbares System bildet.

Weitere Einzelheiten und vorteilhafte Ausgestaltungen der erfindungsgemäßen Kartoffelerntemaschine ergeben sich aus der nachfolgenden Beschreibung und der Zeichnung. In der Zeichnung zeigen:
- Fig. 1: eine perspektivische Prinzipdarstellung der Kartoffelerntemaschine im Bereich der Aufnahmevorrichtung mit erfindungsgemäßen Rollrädern,
- Fig. 2: eine Seitenansicht der Kartoffelerntemaschine ähnlich Fig. 1 mit einer Aufnahmephase eines der Kartoffeldämme,
- Fig. 3: eine Perspektivdarstellung der Aufnahmevorrichtung ähnlich Fig. 1 mit zusätzlichen Baugruppen im Bereich der Rollräder,
- Fig. 4: eine Draufsicht der Aufnahmevorrichtung gemäß Fig. 3,
- Fig. 5: eine Vorderansicht der Aufnahmevorrichtung gemäß Fig. 4,
- Fig. 6: eine Vorderansicht ähnlich Fig. 4 mit der veränderte seitliche Rollräder aufweisenden Aufnahmevorrichtung, und
- Fig. 7: eine Perspektivdarstellung der Aufnahmevorrichtung gemäß Fig. 6.

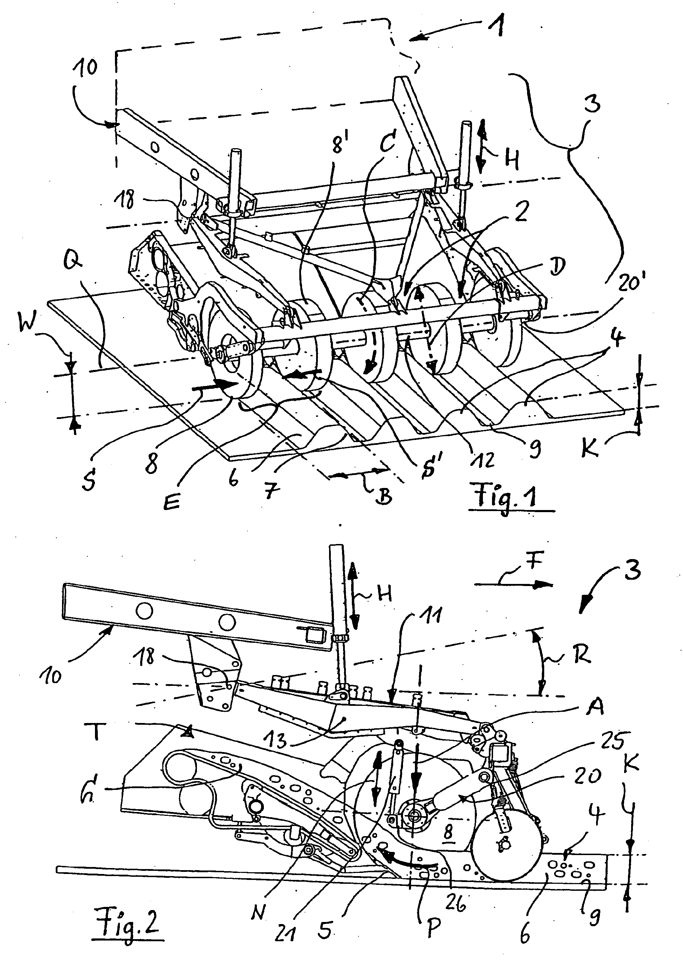

In Fig. 1 ist eine insgesamt mit 1 bezeichnete Kartoffelerntemaschine dargestellt, deren Aufbau nur schematisch angedeutet ist. Im vorderen Bereich ist die Maschine 1 mit einer zumindest ein Rodeaggregat 2 aufweisenden Aufnahmevorrichtung 3 zum Aufnehmen von Kartoffeldämmen 4 versehen. Bei bekannten Kartoffelerntemaschinen 1 dieser Art wird die ein oder mehrere Rodeschar(e) 5 aufweisende Aufnahmevorrichtung 3 durch zumindest ein als Auflagetrommel o. dgl. ausgebildetes Auflageelement (nicht dargestellt) bodenseitig, insbesondere im Bereich des Kartoffeldamms 4, abgestützt.

Die Kartoffelerntemaschine 1 ist erfindungsgemäß mit einer Aufnahmevorrichtung 3 versehen, die zumindest zwei entlang gegenüberliegender Seitenränder 6, 7 des zwischenliegenden Kartoffeldamms 4 verlagerbare Rollräder 8, 8' aufweist, die nach Art von multifunktionellen Auflageelementen wirksam sind.

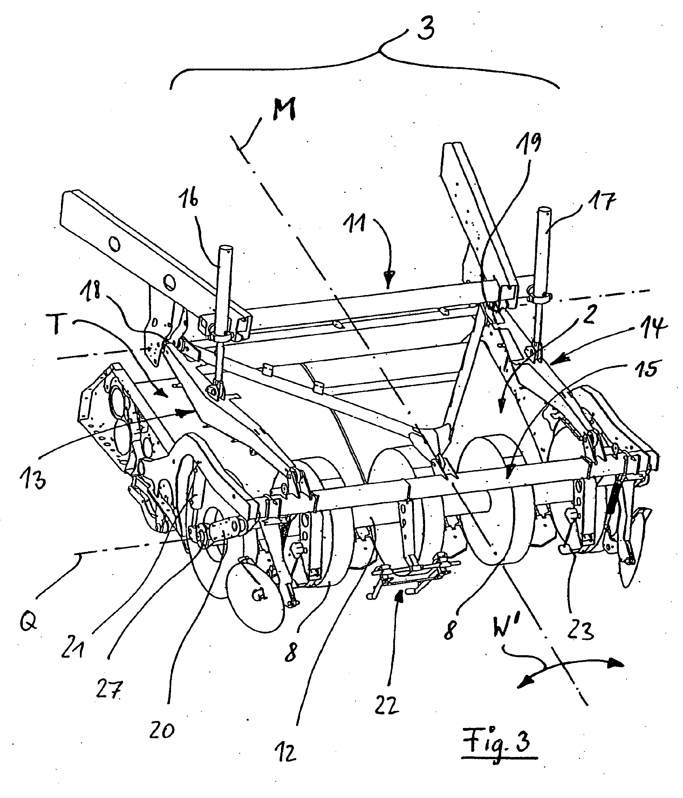

Bei der gemäß Fig. 1 bis 5 dargestellten Ausführung der Kartoffelerntemaschine 1 ist die Aufnahmevorrichtung 3 als eine mehrreihige Baugruppe vorgesehen. Bei dieser mehrreihigen, vorzugsweise 4-reihigen, Aufnahmevorrichtung 3 ist die Anzahl der paarweise zusammenwirkenden Rollräder 8 jeweils um eines höher als die Anzahl der aufzunehmenden Kartoffeldämme 4, so daß sich bei dieser Ausführung zur Rodung von vier Kartoffeldämmen 4 eine Aufnahmevorrichtung 3 mit fünf quer zur Fahrtrichtung F aneinandergereihten Rollrädern 8 (Fig. 1, Fig. 3) ergibt.

Die beiden jeweils zusammenwirkenden Rollräder 8, 8' bilden damit eine zumindest einen Anteil der Gewichtskraft A des Rodeaggregates 2 abstützende, zur Steuerung der Rodeschare 5 vorgesehene und am aufzunehmenden Kartoffeldamm 4 als eine Einzugshilfe wirksame Führungseinheit E. In der dargestellten Ausführung mit fünf Rollrädern 8 ist die Gewichtskraft A entsprechend mehrreihig verteilt, so daß die bodenseitige Flächenpressung je Rollrad 8 durch entsprechende Verteilung reduziert ist.

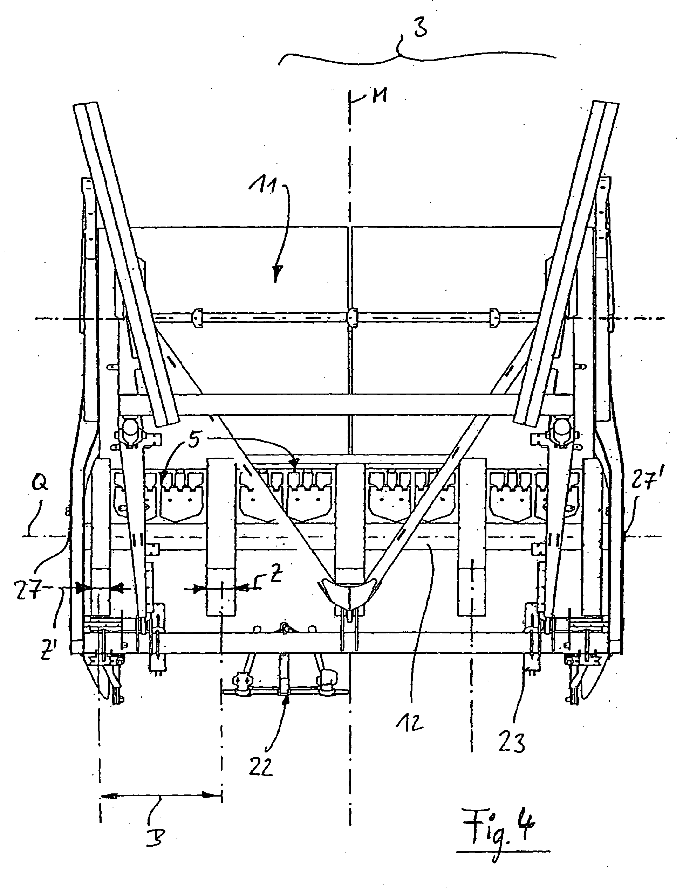

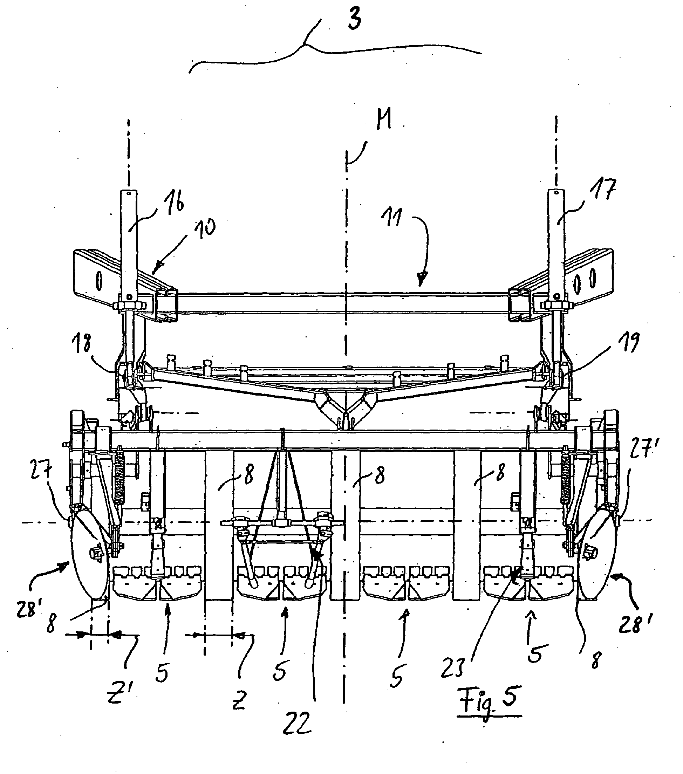

Aus der Ansicht gemäß Fig. 1 ergibt sich, daß die Rollräder 8 im Vergleich zu bekannten Tastrollen o. dgl. Auflageelementen einen vergrößerten Durchmesser D aufweisen, wobei dieser an die entsprechenden Rodebedingungen (Arbeitshöhe W, Fig. 1), insbesondere in Bezug auf die Höhe K der Kartoffeldämme 4 anpaßbar ist. Die beiden Rollräder 8, 8' einer Führungseinheit E weisen im Vergleich zur Höhe K des Kartoffeldamms 4 einen um ein Vielfaches, insbesondere das 2,5-fache, größeren Durchmesser D auf. Dabei sind die Rollräder 8 der mehrreihigen Aufnahmevorrichtung 3 in Querrichtung jeweils mit dem gleichen Durchmesser D versehen. Die Ansichten gemäß Fig. 4 und Fig. 5 zeigen, daß die Rollräder 8 mit unterschiedlicher Breite Z, Z' versehen sein können.

Die Konstruktion der Führungseinheit E sieht vor, daß zwischen den quer zur Fahrtrichtung F eine Reihe bildenden Rollrädern 8 (Stützachse Q) ein variierbarer, insbesondere an den Abstand der Kartoffeldämme 4 anpaßbarer Stützabstand B (Fig. 1) vorgesehen ist. Die Rollräder 8 können entsprechend dem Erntegut bzw. dem Profil des Kartoffeldamms mit unterschiedlichen Stützabständen angeordnet werden (nicht dargestellt). Denkbar sind auch nicht näher dargestellte Stellelemente zur Verstellung der Rollräder 8 quer zur Fahrtrichtung F, so daß die Rollräder 8 durch eine manuelle oder automatische Querverstellung jeweils optimal in der Furche 9 zwischen den Kartoffeldämmen 4 abgestützt sind. In jedem Fall wird am Kartoffeldamm 4 eine seitliche Führung bei 6, 7 erreicht und das Gemisch G kann zwischen den beiden Rollrädern 8, 8' optimal auf einer Trennstrecke T in die Maschine 1 geleitet werden (Fig. 2).

Die Aufnahmevorrichtung 3 weist in Bewegungsrichtung F der Maschine 1 drehbare Rollräder 8 (Pfeil C) auf, wobei die Kartoffelerntemaschine 1 insgesamt mittels nicht dargestellter Antriebsräder in Fahrtrichtung F bewegt wird. Denkbar ist auch, die Rollräder 8 mit einem nicht dargestellten separaten Antrieb zu versehen, so daß die in Fig. 1 und 2 beispielhaft dargestellten Wirkungen der Rollräder 8, 8' als Einzugshilfe (hier: seitliche Pressung des Dammes 4 gemäß Pfeil S, S' und Mitnahmewirkung gemäß Pfeil P) aktiv unterstützbar sind.

Die im Nahbereich der Rollräder 8 befindlichen Rodeschare 5 können durch die Führungseinheit E bzw. eine höhenverstellbare Abstützung der Rollräder 8 optimal auf die Höhe K der Kartoffeldämme 4 und damit den mehrreihigen Rodevorgang (Fig. 2) eingestellt werden.

Aus Fig. 3 bis 5 ergeben sich dafür vorgesehene konstruktive Einzelheiten der Aufnahmevorrichtung 3, wobei diese mit einer einerseits mit einem Maschinengestell 10 verbindbaren und andererseits im Bereich der Rodeschare 5 die Rollräder 8 tragenden Gestängebaugruppe 11 versehen ist. Die Rollräder 8 sind dabei in Fahrtrichtung F drehbar an einer Querachse 12 der Gestängebaugruppe 11 gelagert. Fig. 3 zeigt, daß die im wesentlichen symmetrisch zur Längsmittelebene M der Maschine 1 aufgebaute Gestängebaugruppe 11 als ein zwei seitliche Lenker 13, 14 und einen vorderen Querbalken 15 aufweisender Führungs- und Lenkrahmen ausgebildet ist.

Damit kann die Aufnahmevorrichtung 3 mittels jeweiliger an den Lenkern 13, 14 angreifender und insbesondere in Form von Hubzylindern 16, 17 ausgebildeter Antriebselemente betätigt werden. Für eine Hubbewegung gemäß Pfeil H (Fig. 2) ist die Aufnahmevorrichtung 3 im Bereich der Lenker 13, 14 mittels jeweiliger Stützlager 18, 19 so mit dem Maschinengestell 10 verbunden, daß die Hubbewegung H eine Schwenkbewegung gemäß Pfeil R (Fig. 2) bewirkt. Damit kann die Aufnahmevorrichtung 3 insgesamt abgehoben werden, z. B. am Rand eines Feldes oder bei der Fahrt.

Aus der Seitenansicht gemäß Fig. 2 und der Vorderansicht gemäß Fig. 5 wird die Halterung der die Rollräder 8 zentral tragenden Querachse 12 an der Gestängebaugruppe 11 deutlich. Die Querachse 12 ist durch zumindest einen von dieser aus radial verlaufenden Schwinghebel 20 mit dem vorderen Bereich der Gestängebaugruppe 11 mittels eines Stützlagers 25 verbunden. Mit diesem Schwinghebel 20 kann die Querachse 12 gemeinsam mit den Rollrädern 8 durch zumindest ein weiteres Huborgan in Form eines Hubzylinders 21 verlagert werden (Pfeil N). Die Bewegung des Hubzylinders 21 wird am kurzen Arm 26 des Schwinghebels 20 eingeleitet, durch dessen Traglager 27 umgelenkt und auf das Stützlager 28 übertragen, so daß insbesondere eine Lageänderung der Baueinheit E relativ zur Gestängebaugruppe 11 erfolgt (Pfeil N).

Die Zusammenschau von Fig. 3 bis 5 verdeutlicht, daß die Querachse 12 bei symmetrischem Aufbau der Vorrichtung 3 jeweils endseitig im Bereich des Traglagers 27, 27' mit der Gestängebaugruppe 11 verbunden ist und die jeweils als Verbinder vorgesehenen Huborgane in Form von zwei parallelen Hubzylindern 21, 21' mit dem jeweiligen Schwinghebel 20, 20' so zusammenwirken, daß die Schwenk- und Einstellbewegung gemäß Pfeil N möglich ist. Diese über eine Steuerung der Maschine 1 beeinflußbare Schwenkbewegung N wird in einfachster Ausführung als Tiefensteuerung genutzt. Auch während dem Rodevorgang ist eine weitgehend beliebige Verstellung der Hubzylinder 21, 21' denkbar. Die Verlagerung der Rollräder 8 definiert dabei den als Rodetiefe wirksamen Höhenabstand zu den Rodescharen 5.

Die Draufsicht gemäß Fig. 4 zeigt eine zusätzliche Tasteinheit 23, die als auf einem der Kartoffeldämme 4 auflegbare Baugruppe zur Steuerung der Aufnahmevorrichtung 3 bzw. der Rodeaggregate 2 im Bereich der Rollräder 8 vorgesehen ist. Denkbar ist auch, daß im Bereich der Rollräder 8 eine Meßeinrichtung 22 vorgesehen ist, mit der die Aufnahmetiefe der Aufnahmevorrichtung 3 kontrollierbar und steuerbar ist.

Die Kartoffelerntemaschine 1 ist für den Einsatz in hangigem Gelände so ausgebildet, daß die Aufnahmevorrichtung 3 weitgehend unabhängig vom Führerhaus, dem Sammelbunker o. dgl. Baugruppen (nicht dargestellt) in Richtung gemäß Pfeil W' (Fig. 3) um die Mittellängsebene M schwenkbar ist. Die Steuerung der Fahrtrichtung F entsprechend dem Verlauf der Kartoffeldämme 4 kann dabei manuell vom Fahrer der Maschine erfolgen. Mit der Meßeinrichtung 22 ist auch eine Kontrolle oder Steuerung dieses Vorgangs möglich, so daß die Seitensteuerung der Maschine 1 durch ein entsprechendes Meßsignal der Einrichtung 22 optimiert werden kann. Für diese weitgehend automatische Zentrierung auf dem Kartoffeldamm sind auch die erfindungsgemäßen Rollräder 8 nutzbar. Als Führungsgröße können dabei die in Richtung S, S' (Fig. 1) wirksamen Kräfte genutzt werden, wobei mittels jeweiliger Sensoren (nicht dargestellt) im Bereich der seitlichen Schwinghebel 20, 20' jeweilige seitliche Belastungen erfaßbar sind und durch deren Minimierung wird die Aufnahmevorrichtung 3 optimal entsprechend dem Verlauf der Kartoffeldämme 4 geführt.

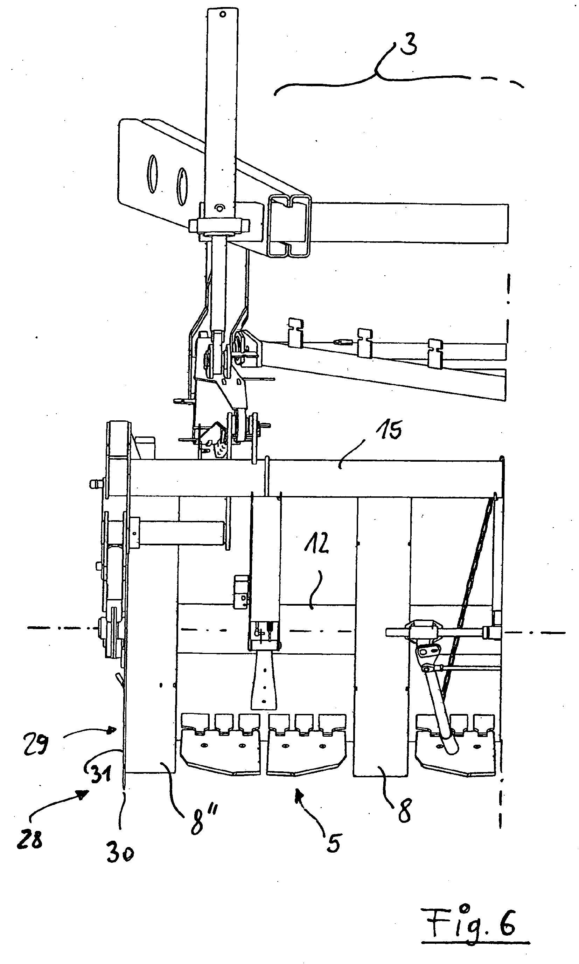

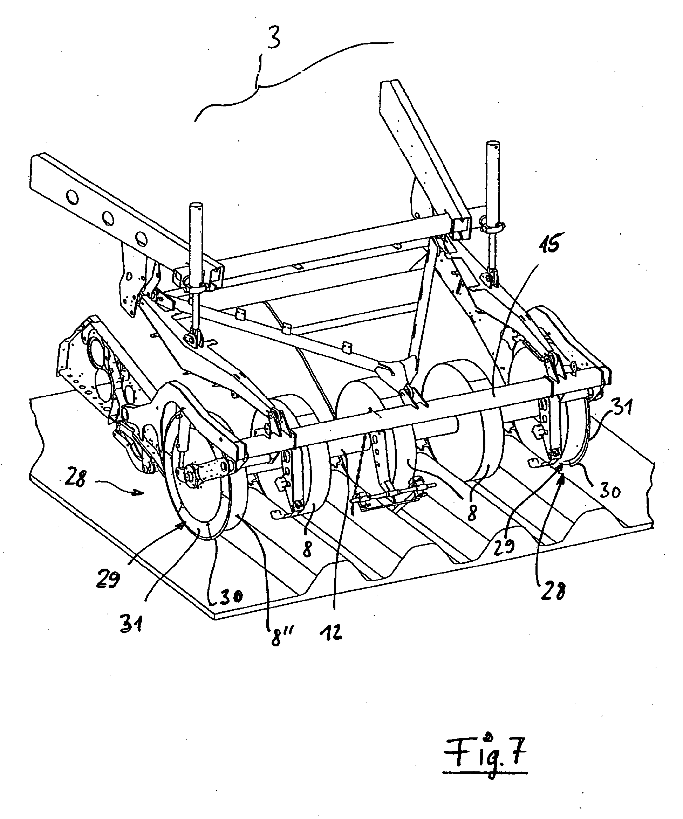

In Fig. 6 und 7 ist eine weitere Ausführungsform der Aufnahmevorrichtung 3 dargestellt, wobei diese im Bereich der beiden äußeren Rollräder 8" mit einem allgemein mit 28 bezeichneten Schneidorgan (Fig. 5: Sechscheibe 28' als Schneidorgan) versehen ist.

In vorteilhafter Ausführung ist als Schneidorgan 28 ein mit den Rollrädern 8" unmittelbar verbindbares Schneidglied 29 (Fig. 6) vorgesehen, dessen Schneidwirkung damit unmittelbar durch die Druck- bzw. Gewichtskraft gemäß Pfeil A (Fig. 2) bewirkt wird. Mit dem Schneidglied 29 wird eine Abtrennung von in die Randfurche ragenden Pflanzenteilen wie Kartoffelkraut o. dgl. erreicht. In der Perspektivdarstellung gemäß Fig. 7 wird deutlich, daß als Schneidglied 29 eine eine Schneidkante 30 bildende, insbesondere mehrgliedrige Ringscheibe 31 vorgesehen ist. Diese Ringscheibe 31 ist unmittelbar randseitig mit dem jeweiligen Rollrad 8" verbunden, wobei ebenfalls denkbar ist, eine Ringscheibe mittig auf dem Rollrad 8" anzuordnen (nicht dargestellt).

In einer weiteren Ausführung dieser Rollräder 8" mit Schneidorgan 28 ist denkbar, daß die Rollräder 8" direkt und/oder das zugeordnete Schneidorgan 28 in Richtung des Tragbalkens 15 bzw. der Querachse 12 durch eine entsprechende Halterung quereinstellbar ist/sind (nicht dargestellt), so daß entsprechend den Erntebedingungen eine optimale Einstellung der Aufnahmevorrichtung 3 möglich ist.

## Patentansprüche

1. Kartoffelerntemaschine mit einer zumindest ein Rodeaggregat (2) aufweisenden Aufnahmevorrichtung (3) zum Aufnehmen von Kartoffeldämmen (4), wobei die ein oder mehrere Rodeschar(e) (5) aufweisende Aufnahmevorrichtung (3) durch zumindest ein zusätzliches Auflageelement bodenseitig abstützbar ist, **dadurch gekennzeichnet, daß** das Auflageelement von zumindest zwei entlang gegenüberliegender Seitenränder (6, 7) eines zwischenliegenden Kartoffeldamms (4) verlagerbaren und diesen mittels ihres Querabstandes (B) begrenzenden Rollrädern (8, 8') gebildet ist, derart, daß für zumindest eine Förderphase beim Aufnehmen des Kartoffeldamms (4) eine Zwangsführung nach Art eines Einzugskanals bewirkt ist.

2. Kartoffelerntemaschine nach Anspruch 1, **dadurch gekennzeichnet, daß** die beiden Rollräder (8, 8') eine zumindest einen Anteil des Gewichts (A) des Rodeaggregates (2) abstützende, zur Steuerung der Rodeschare (5) vorgesehene und arm aufzunehmenden Kartoffeldamm (4) als Einzugshilfe (Pfeil S, S', P) wirksame Führungseinheit (E) bilden.

3. Kartoffelerntemaschine nach Anspruch 1 oder 2, **dadurch gekennzeichnet, daß** bei einer mehrreihigen, vorzugsweise 4-reihigen Aufnahmevorrichtung (3) die Anzahl der Rollräder (8) jeweils um eines höher ist als die Anzahl der aufzunehmenden Kartoffeldämme (4).

4. Kartoffelerntemaschine nach einem der Ansprüche 1 bis 3, **dadurch gekennzeichnet, daß** die Rollräder (8) einen entsprechend den Rodebedingungen (K) bemeßbaren Durchmesser (D) aufweisen.

5. Kartoffelerntemaschine nach einem der Ansprüche 1 bis 4, **dadurch gekennzeichnet, daß** die Rollräder (8) einen im Vergleich zur Höhe des Kartoffeldamms (4) um ein Vielfaches, insbesondere das 2,5-fache, größeren Durchmesser (D) aufweisen.

6. Kartoffelerntemaschine nach einem der Ansprüche 1 bis 5, **dadurch gekennzeichnet, daß** bei einer mehrreihigen Aufnahmevorrichtung (3) die Rollräder (8) jeweils den gleichen Durchmesser (D) aufweisen.

7. Kartoffelerntemaschine nach einem der Ansprüche 1 bis 6, **dadurch gekennzeichnet, daß** zwischen den quer zur Fahrtrichtung (F) eine Reihe bildenden Rollrädern (8) ein variierbarer, insbesondere an den Abstand der Kartoffeldämme (4) anpaßbarer Stützabstand (B) vorgesehen ist.

8. Kartoffelerntemaschine nach Anspruch 7, **dadurch gekennzeichnet, daß** die Rollräder (8) mit unterschiedlichem Stützabstand angeordnet sind.

9. Kartoffelerntemaschine nach einem der Ansprüche 1 bis 8, **dadurch gekennzeichnet, daß** die Rollräder (8) antreibbar sind.

10. Kartoffelerntemaschine nach einem der Ansprüche 1 bis 9, **dadurch gekennzeichnet, daß** die Rollräder (8) höheneinstellbar (Pfeil N) sind.

11. Kartoffelerntemaschine nach einem der Ansprüche 1 bis 10, **dadurch gekennzeichnet, daß** die Rollräder (8) quer zur Fahrtrichtung (F) verstellbar sind.

12. Kartoffelerntemaschine nach Anspruch 10, **dadurch gekennzeichnet, daß** die Rollräder (8) durch Querverstellung in einer jeweils zwischen den Kartoffeldämmen (4) vorgesehenen Furche (9) abstützbar sind.

13. Kartoffelerntemaschine nach einem der Ansprüche 1 bis 12, **dadurch gekennzeichnet, daß** im Bereich der Rollräder (8) eine Meßeinrichtung (22) vorgesehen ist, mit der die Aufnahmetiefe der Aufnahmevorrichtung (3) bzw. des jeweiligen Rodeschars (5) steuerbar ist.

14. Kartoffelerntemaschine nach einem der Ansprüche 1 bis 13, **dadurch gekennzeichnet, daß** die Aufnahmevorrichtung (3) bzw. das Rodeaggregat (2) im Bereich der Rollräder (8) mit zumindest einer auf einem der Kartoffeldämme (4) auflegbaren Tasteinheit (23) versehen ist.

15. Kartoffelerntemaschine nach einem der Ansprüche 1 bis 14, **dadurch gekennzeichnet, daß** die Aufnahmevorrichtung (3) mit einer diese einerseits mit einem Maschinengestell (10) verbindenden und andererseits im Bereich der Rodeschare (5) die Rollräder (8) tragenden Gestängebaugruppe (11) versehen ist.

16. Kartoffelerntemaschine nach einem der Ansprüche 1 bis 15, **dadurch gekennzeichnet, daß** die Rollräder (8) in Fahrtrichtung drehbar an einer Querachse (12) der Gestängebaugruppe (11) gelagert sind.

17. Kartoffelerntemaschine nach einem der Ansprüche 1 bis 16, **dadurch gekennzeichnet, daß** die im wesentlichen symmetrisch zur Längsmittelebene (M) der Maschine (1) aufgebaute Gestängebaugruppe (11) als ein zwei seitliche Lenker (13, 14) und einen vorderen Querbalken (15) aufweisender Rahmen ausgebildet ist, derart, daß die Aufnahmevorrichtung (3) mittels jeweiliger an den Lenkern (13, 14) angreifender Hubzylinder (15, 16) und jeweiliger im Abstand zu diesen vorgesehener Stützlager (18, 19) insgesamt schwenkbar mit dem Maschinengestell (10) verbunden ist.

18. Kartoffelerntemaschine nach einem der Ansprüche 1 bis 17, **dadurch gekennzeichnet, daß** die die Rollräder (8) zentral tragende Querachse (12) durch zumindest einen von dieser aus radial verlaufenden Schwinghebel (20, 20') an der Gestängebaugruppe (11) gelagert ist, derart, daß die Querachse (12) gemeinsam mit den Rollrädern (8) durch zumindest ein Huborgan (21) verlagerbar ist.

19. Kartoffelerntemaschine nach Anspruch 18, **dadurch gekennzeichnet, daß** die Querachse (12) jeweils endseitig im Bereich eines Gelenkes (27, 27') mit der Gestängebaugruppe (11) verbunden ist und die als Verbinder vorgesehenen Huborgane (21, 21') in Form von zwei parallelen Hubzylindern mit dem jeweiligen Schwinghebel (20, 20') zusammenwirken.

20. Kartoffelerntemaschine nach einem der Ansprüche 1 bis 19, **dadurch gekennzeichnet, daß** die Rollräder (8) mit einer zur automatischen Führung der Aufnahmevorrichtung (3) entlang der Kartoffeldämme (4) vorgesehenen Meßeinrichtung (22, 23) zusammenwirken.

21. Kartoffelerntemaschine nach Anspruch 20, **dadurch gekennzeichnet, daß** die Meßeinrichtung jeweilige an den Tragteilen der Rollräder (8) befindliche Sensoren aufweist.

22. Kartoffelerntemaschine nach Anspruch 20 oder 21, **dadurch gekennzeichnet, daß** die Meßeinrichtung jeweilige an zumindest einem der beiden Schwinghebel (20, 20') wirksame Seitenkräfte (S, S') erfassende Sensoren aufweist.

23. Kartoffelerntemaschine nach einem der Ansprüche 1 bis 22, **dadurch gekennzeichnet, daß** zumindest die äußeren der Rollräder (8") mit einem Schneidorgan (28, 28') zusammenwirken.

24. Kartoffelerntemaschine nach Anspruch 23, **dadurch gekennzeichnet, daß** als Schneidorgan (28) ein auf den Rollrädern (8") befindliches Schneidglied (29) vorgesehen ist.

25. Kartoffelerntemaschine nach Anspruch 23 oder 24, **dadurch gekennzeichnet, daß** als Schneidglied (29) eine eine Schneidkante (30) aufweisende Ringscheibe (31) vorgesehen ist.

26. Kartoffelerntemaschine nach einem der Ansprüche 23 bis 25, **dadurch gekennzeichnet, daß** die Ringscheibe (31) unmittelbar randseitig oder mittig mit dem Rollrad (8") verbunden ist.

27. Kartoffelerntemaschine nach einem der Ansprüche 23 bis 26, **dadurch gekennzeichnet, daß** das jeweilige äußere Rollrad (8") und/oder das Schneidorgan (28) in Richtung der Querachse (12) und/oder der Schnittiefe einstellbar ist/sind.

## Claims

1. Potato harvester having a lifting arrangement (3) for lifting rows of potatoes (4) having at least one lifting sub-assembly (2), the lifting arrangement (3), which has one or more lifting shares (5), being able to be supported on the ground by at least one additional supporting element, **characterised in that** the supporting element is formed by at least two rolling wheels (8, 8') which are displaceable along opposite lateral edges (6, 7) of a row of potatoes (4) situated between them and which define the latter by means of their transverse spacing (B), in such a way that, for at least a feeding phase when the row of potatoes (4) is being lifted, forced guidance of the kind given by an intake passage is produced.

2. Potato harvester according to claim 1, **characterised in that** the two rolling wheels (8, 8') form a guiding unit (E), which guiding unit (E) supports at least part of the weight (A) of the lifting sub-assembly (2), is intended to control the lifting shares (5), and acts as an aid to intake (arrows S, S', P) on the row of potatoes (4) which is being lifted.

3. Potato harvester according to claim 1 or 2, **characterised in that**, when there is a multi-row, and preferably 4-row, lifting arrangement (3), the number of rolling wheels (8) is one more than the number of row of potatoes (4) to be lifted in the given case.

4. Potato harvester according to one of claims 1 to 3, **characterised in that** the rolling wheels (8) are of a diameter (D) which can be sized to suit the lifting conditions (K).

5. Potato harvester according to one of claims 1 to 4, **characterised in that** the rolling wheels (8) are of a diameter (D) which is a number of times, and in particular 2.5 times, greater than the height of the row of potatoes (4).

6. Potato harvester according to one of claims 1 to 5, **characterised in that** when there is a multi-row lifting arrangement (3), the rolling wheels (8) are each of the same diameter (D).

7. Potato harvester according to one of claims 1 to 6, **characterised in that** there is provided, between the rolling wheels (8) which form a line transversely to the direction of travel (F), a support spacing (B) which is variable and which can be matched in particular to the spacing between the rows of potatoes (4).

8. Potato harvester according to claim 7, **characterised in that** the rolling wheels (8) are arranged at different support spacings.

9. Potato harvester according to one of claims 1 to 8, **characterised in that** the rolling wheels (8) can be driven.

10. Potato harvester according to one of claims 1 to 9, **characterised in that** the rolling wheels (8) can be adjusted in the heightwise direction (arrow N).

11. Potato harvester according to one of claims 1 to 10, **characterised in that** the rolling wheels (8) are adjustable transversely to the direction of travel (F).

12. Potato harvester according to claim 10, **characterised in that** by transverse adjustment the rolling wheels (8) can be supported in a furrow (9) which is provided between each pair of row of potatoes (4).

13. Potato harvester according to one of claims 1 to 12, **characterised in that** there is provided, in the region of the rolling wheels (8), a measuring means (22) by which the depth of lift of the lifting arrangement (3) or of the given lifting share (5) can be controlled.

14. Potato harvester according to one of claims 1 to 13, **characterised in that** the lifting arrangement (3) or the lifting sub-assembly (2) is provided, in the region of the rolling wheels (8), with at least one sensing unit (23) which can rest down on one of the row of potatoes (4).

15. Potato harvester according to one of claims 1 to 14, **characterised in that** the lifting arrangement (3) is provided with a linkage sub-assembly (11) which on the one hand connects it to a machine chassis (10) and on the other hand carries the rolling wheels (8) in the region of the lifting shares (5).

16. Potato harvester according to one of claims 1 to 15, **characterised in that** the rolling wheels (8) are mounted on a transverse shaft (12) belonging to the linkage sub-assembly (11) to be rotatable in the direction of travel.

17. Potato harvester according to one of claims 1 to 16, **characterised in that** the linkage sub-assembly (11), which is constructed to be substantially symmetrical about the longitudinal centre plane (M) of the machine (1), is in the form of a frame having two lateral control arms (13, 14) and a front transverse bar (15), in such a way that the lifting arrangement (3) is connected to the chassis (10) of the machine to be pivotable as a whole by means of raising cylinders (15, 16) which engage with respective ones of the control arms (13, 14) and by means of respective supporting bearings (18, 19) which are provided at a distance from the raising cylinders (15, 16).

18. Potato harvester according to one of claims 1 to 17, **characterised in that** the transverse shaft (12) which carries the rolling wheels (8) in a central position is mounted on the linkage sub-assembly (11) by at least one swinging arm (20, 20') which extends radially from the transverse shaft (12), in such a way that the transverse shaft (12) can be displaced, together with the rolling wheels (8), by at least one raising member (21).

19. Potato harvester according to claim 18, **characterised in that** the transverse shaft (12) is connected to the linkage sub-assembly (11) in the region of a joint (27, 27') at each of its ends, and the raising members (21, 21') in the form of two parallel raising cylinders, which are intended as connecting devices, co-operate with respective swinging arms (20, 20').

20. Potato harvester according to one of claims 1 to 19, **characterised in that** the rolling wheels (8) co-operate with a measuring means (22, 23) which is intended to guide the lifting arrangement (3) along the row of potatoes (4) automatically.

21. Potato harvester according to claim 20, **characterised in that** the measuring means has respective sensors which are situated on the parts supporting the rolling wheels (8).

22. Potato harvester according to claim 20 or 21, **characterised in that** the measuring means has respective sensors which sense sideways forces (S, S') acting on at least one of the two swinging arms (20, 20')

23. Potato harvester according to one of claims 1 to 22, **characterised in that** at least the outer ones of the rolling wheels (8") co-operate with a cutting member (28, 28')

24. Potato harvester according to claim 23, **characterised in that** what is provided as a cutting member (28) is a cutting element (29) which is situated on the rolling wheels (8").

25. Potato harvester according to claim 23 or 24, **characterised in that** what is provided as a cutting element (29) is an annular disc (31) having a cutting edge (30).

26. Potato harvester according to one of claims 23 to 25, **characterised in that** the annular disc (31) is connected directly to the rolling wheel (8") at the edge or in the centre.

27. Potato harvester according to one of claims 23 to 26, **characterised in that** a given outer rolling wheel (8") and/or cutting member (28) can be adjusted in the direction defined by the transverse shaft (12) and/or in the direction of the depth of cut.

## Revendications

1. Machine de récolte de pommes de terre avec un dispositif de réception (3) présentant au moins un ensemble d'arrachage (2) pour la réception des remblais de pommes de terre (4), le dispositif de réception (3) présentant un ou plusieurs socs d'arrachage (5) pouvant être en appui par au moins un élément d'appui supplémentaire côté sol, **caractérisée en ce que** l'élément d'appui est formé par au moins deux roues de roulement (8, 8') pouvant être déplacées le long de bords latéraux (6, 7) opposés d'un remblai de pommes de terre (4) intermédiaire et délimitant celui-ci au moyen de leur distance transversale (B) de telle sorte que pour au moins une phase de transport lors de la réception du remblai de pommes de terre (4), un guidage à force soit provoqué selon le type de canal d'alimentation.

2. Machine de récolte de pommes de terre selon la revendication 1, **caractérisée en ce que** les deux roues de roulement (8, 8') forment une unité de guidage (E) appuyant au moins une partie du poids (A) de l'ensemble d'arrachage (2), prévue pour la commande des socs d'arrachage (5) et agissant sur le remblai de pommes de terre (4) à recevoir comme aide à l' alimentation (flèche S, S', P).

3. Machine de récolte de pommes de terre selon la revendication 1 ou 2, **caractérisée en ce que** pour un dispositif de réception (3) à plusieurs rangs, de préférence 4 rangs, le nombre de roues de roulement (8) est respectivement supérieur d'un au nombre de remblais de pommes de terre (4) à recevoir.

4. Machine de récolte de pommes de terre selon l'une quelconque des revendications 1 à 3, **caractérisée en ce que** les roues de roulement (8) présentent un diamètre (D) pouvant être dimensionné selon les conditions d'arrachage (K).

5. Machine de récolte de pommes de terre selon l'une quelconque des revendications 1 à 4, **caractérisée en ce que** les roues de roulement (8) présentent un diamètre (D) supérieur par rapport à la hauteur du remblai de pommes de terre (4) d'un multiple, en particulier de 2,5 fois.

6. Machine de récolte de pommes de terre selon l'une quelconque des revendications 1 à 5, **caractérisée en ce que** pour un dispositif de réception (3) à plusieurs rangs, les roues de roulement (8) présentent chacune le même diamètre (D).

7. Machine de récolte de pommes de terre selon l'une quelconque des revendications 1 à 6, **caractérisée en ce qu'**entre les roues de roulement (8) formant transversalement au sens de la marche (F) un rang, une distance d'appui (B) variable, pouvant être adaptée en particulier à la distance entre les remblais de pommes de terre (4) est prévue.

8. Machine de récolte de pommes de terre selon la revendication 7, **caractérisée en ce que** les roues de roulement (8) sont disposées à une distance d'appui différente.

9. Machine de récolte de pommes de terre selon l'une quelconque des revendications 1 à 8, **caractérisée en ce que** les roues de roulement (8) peuvent être entraînées.

10. Machine de récolte de pommes de terre selon l'une quelconque des revendications 1 à 9, **caractérisée en ce que** les roues de roulement (8) peuvent être réglées en hauteur (flèche N).

11. Machine de récolte de pommes de terre selon l'une quelconque des revendications 1 à 10, **caractérisée en ce que** les roues de roulement (8) peuvent être réglées transversalement au sens de la marche (F).

12. Machine de récolte de pommes de terre selon la revendication 10, **caractérisée en ce que** les roues de roulement (8) peuvent être appuyées par réglage transversal dans un sillon (9) prévu respectivement entre les remblais de pommes de terre (4).

13. Machine de récolte de pommes de terre selon l'une quelconque des revendications 1 à 12, **caractérisée en ce que** dans la zone des roues de roulement (8) est prévu un dispositif de mesure (22), avec lequel la profondeur de réception du dispositif de réception (3) ou du soc d'arrachage (5) respectif peut être commandée.

14. Machine de récolte de pommes de terre selon l'une quelconque des revendications 1 à 13, **caractérisée en ce que** le dispositif de réception (3) ou l'ensemble d'arrachage (2) est pourvu dans la zone des roues de roulement (8) d'au moins une unité de palpage (23) pouvant reposer sur l'un des remblais de pommes de terre (4).

15. Machine de récolte de pommes de terre selon l'une quelconque des revendications 1 à 14, **caractérisée en ce que** le dispositif de réception (3) est pourvu d'un ensemble de tiges (11) reliant d'une part celui-ci à un bâti de machine (10) et portant d'autre part dans la zone des socs d'arrachage (5) les roues de roulement (8).

16. Machine de récolte de pommes de terre selon l'une quelconque des revendications 1 à 15, **caractérisée en ce que** les roues de roulement (8) sont logées dans le sens de la marche à rotation sur un axe transversal (12) de l'ensemble de tiges (11).

17. Machine de récolte de pommes de terre selon l'une quelconque des revendications 1 à 16, **caractérisée en ce que** l'ensemble de tiges (11) constitué essentiellement à symétrie par rapport au plan médian longitudinal (M) de la machine (1) est réalisé comme un cadre présentant deux bras articulés (13, 14) latéraux et une traverse (15) avant de telle sorte que le dispositif de réception (3) soit relié au moyen de cylindres de levage (15, 16) respectifs engageant les bras articulés (13, 14) et de paliers d'appui (18, 19) respectifs prévus à distance de ceux-ci dans l'ensemble à pivotement au bâti de machine (10).

18. Machine de récolte de pommes de terre selon l'une quelconque des revendications 1 à 17, **caractérisée en ce que** l'axe transversal (12) portant centralement les roues de roulement (8) est logé par au moins un levier oscillant (20, 20') s'étendant radialement à partir de celui-ci sur l'ensemble de tiges (11) de telle sorte que l'axe transversal (12) puisse être déplacé conjointement avec les roues de roulement (8) par au moins un organe de levage (21).

19. Machine de récolte de pommes de terre selon la revendication 18, **caractérisée en ce que** l'axe transversal (12) est relié respectivement côté extrémité dans la zone d'une articulation (27, 27') à l'ensemble de tiges (11) et les organes de levage (21, 21') prévus comme connecteurs sous la forme de deux cylindres de levage parallèles coopèrent avec le levier oscillant (20, 20') respectif.

20. Machine de récolte de pommes de terre selon l'une quelconque des revendications 1 à 19, **caractérisée en ce que** les roues de roulement (8) coopèrent avec un dispositif de mesure (22, 23) prévu pour le guidage automatique du dispositif de réception (3) le long des remblais de pommes de terre (4).

21. Machine de récolte de pommes de terre selon la revendication 20, **caractérisée en ce que** le dispositif de mesure présente des capteurs respectifs se trouvant sur les éléments porteurs des roues de roulement (8).

22. Machine de récolte de pommes de terre selon la revendication 20 ou 21, **caractérisée en ce que** le dispositif de mesure présente des capteurs respectifs détectant des forces latérales (S, S') agissant sur au moins l'un des deux leviers oscillants (20, 20').

23. Machine de récolte de pommes de terre selon l'une quelconque des revendications 1 à 22, **caractérisée en ce qu'**au moins les roues de roulement (8") extérieures coopèrent avec un organe de coupe (28, 28').

24. Machine de récolte de pommes de terre selon la revendication 23, **caractérisée en ce que** comme organe de coupe (28) est prévu un élément de coupe (29) se trouvant sur les roues de roulement (8").

25. Machine de récolte de pommes de terre selon la revendication 23 ou 24, **caractérisée en ce que** comme élément de coupe (29) est prévu une rondelle annulaire (31) présentant une arête de coupe (30).

26. Machine de récolte de pommes de terre selon l'une quelconque des revendications 23 à 25, **caractérisée en ce que** la rondelle annulaire (31) est reliée directement côté bord ou au milieu à la roue de roulement (8").

27. Machine de récolte de pommes de terre selon l'une quelconque des revendications 23 à 26, **caractérisée en ce que** la roue de roulement (8" ) extérieure respective et/ou l'organe de coupe (28) est/sont réglables en direction de l'axe transversal (12) et/ou de la profondeur de coupe.
